# EUROPEAN PATENT APPLICATION

(11) **EP 4 108 097 A1**
(43) Date of publication of application: **28.12.2022**
(21) Application number: 22179508.1
(22) Date of filing: 17.06.2022
(51) Int. Cl.: A23L 2/395, A23L 2/60, A23L 27/30

(54) **FOOD PREPARATION MADE WITH PLANT EXTRACTS**

(30) Priority: 21.06.2021 IT 202100016088
(71) Applicant: Romano, Ingeborg, 20153 Milano (IT)
(72) Inventor: ROMANÒ, Ingeborg, 20153 Milano (IT); ROMANÒ, Carlo Luca, 20153 Milano (IT)
(74) Representative: Rastelli, Franco

(57) **Abstract**

Food preparation including one or more plant extracts for use in foodstuffs, co-crystallized with erythritol. Compared to the traditional food preparations made with plant extracts, the preparation according to the invention has the advantage to show a new and attractive appearance for the final consumer. The co-crystals, visible to the naked eye and having a size which may be directly determined in the production step of the preparation of the invention, recall a pure and precious product, therefore having a greater value compared to the analogous preparations of the prior art. Such appearance is in fact substantially different and ameliorative with respect to the current powdered formulations, the crystal still maintaining the ability of being easily and quickly reconstituted in beverage form when again placed in an aqueous solution, even at room temperature according to the solubility of the original extract. Further, the preparation of the invention may be advantageously used in the form of "flavoured sweetener" to sweeten and flavour beverages, foods or other preparations for use in foodstuffs. In the beverage reconstitution, the plant extracts present in the crystal provide the required nutritional and organoleptic properties, while erythritol directly provides the suitable sweetening, with no effect on the glycaemic metabolism and on the risk of overweight and dental decay.

## Description

### BACKGROUND OF THE INVENTION

The present invention relates to a food preparation made with plant extracts.

The field of the invention is that of the plant extracts for use in foodstuffs, that is the preparations made with aromatic plants such as tea and the like, which take their aroma from the parts of the original plant or plant organism, such as the roots, the leaves, the flowers and the fruits.

The plant extracts, widely used in the food and beverage industry, normally are in the form of powders or granules for infusions, additives for food and beverages and the like, constituting a concentrate of several nutrients and bioactive substances, which carry out a multiplicity of nutritional and physiological functions, suitable for the well-being of the human body. For such reasons foods and beverages made with plant extracts are generally perceived as "healthier" and more "natural" by the final consumer, compared to the synthetic products.

Among the main usages of plant extracts in the food sector there are those related to their use as additives for foods and beverages. In such application they are used, among other things, as flavouring agents, antioxidants, antimicrobics and preservatives, being able to improve the colour, the taste and the durability of several food products.

Moreover, the plant extracts, in the form of powders or granules to be reconstituted with water or contained in capsules, are directly taken by the final consumer as a supplement or as a beverage.

### SUMMARY OF THE INVENTION

In Italy it is estimated that about 20% of population uses regularly such products and globally the market of preparations made with plant extracts is constantly rising. The increasing request of products made with plant extracts and the further development of the market, above all in the beverage sector, nowadays requires new forms of preparations that are easily portable, storable and available by the user, presenting a new and attractive appearance, keeping at the same time unchanged the organoleptic and nutritional features of the original plant extract.

Further, owing to the frequent need of adding the beverages made with plant extracts with sweetening substances, there is a need to obtain new forms of ready-to-use plant extracts, capable of directly providing the necessary sweetening intake too, however without interfering with the taste and the aroma of the basic plant extract and without favouring adverse effects for health typical of sugary drinks, such as for example a glycaemic level or obesity or dental decay increase.

There is moreover the need that such new preparations of plant extracts may be industrialized at relatively low costs, with minimum or no need for added synthetic products, in order to allow keeping the product in the field of those of natural derivation.

These and other objects are achieved by the food preparation of claim 1. Some preferred embodiments of the invention result from the remaining claims.

Compared to the traditional food preparations made with plant extracts, the preparation according to the invention has the advantage to present a new and attractive appearance for the final consumer. The co-crystals, visible at the naked eye and having a size which may be directly defined in the implementation stage of the preparation of the invention, recall a pure and valuable product, thus having a greater value compared to the similar preparations of the prior art. Such an aspect is in fact substantially different and ameliorative compared to the present formulations in powder form, while the crystal maintains the capability to be easily and rapidly reconstituted in the beverage form when again put into an aqueous solution, even at room temperature according to the solubility of the original extract.

A further advantage of the preparation of the invention lies in that the co-crystals combine in a single product the aromatic and nutritional properties of the plant extract, kept substantially unchanged, with the properties of the zero-calorie natural sweetener, and with no impact on the glucose metabolism and on the dental health, typical of erythritol. As the erythritol concentration may be modulated, within certain limits, in the preparation of the invention, such a property allows to avoid a further addition of sugars in the reconstitution stage of the beverage by the final user.

Moreover, the preparation of the invention, combining in the form of co-crystals the sweetening properties of erythritol with the flavouring and nutritional ones of the plant extract, allows its usage in the innovative and new "flavoured sweetener" form, to be used to sweeten and flavour beverages, foods or other preparations for use in foodstuffs.

The preparation of the invention, in the form of co-crystals of one or more plant extracts with erythritol, has also the advantage of being not hygroscopic and thus able to be better resistant to the storage in moist environments, giving to the product a longer durability either after the packaging, or above all if left in open air after the opening of the package.

Another advantage of the preparation of the invention in co-crystals of plant extracts in erythritol is represented by the possibility of combining one or more plant extracts of different kind, co-crystallizing them in a single product with erythritol, allowing in this way the production of new combinations of products and new aromas and flavours.

The preparation of the invention further allows to add, in the crystallization stage or after this, aromas and/or dyes and other food additives, in order to further improve the product preservation, appearance, scent and flavour.

Finally, the preparation of the invention is suitable to be produced and packaged taking advantage of the technologies already present and validated in the food field and with low environmental impact.

### BRIEF DESCRIPTION OF THE DRAWINGS

These and other objects, advantages and features result from the following description of the food preparation of the invention, better illustrated in the examples and in the figures of the attached drawings.

Wherein:

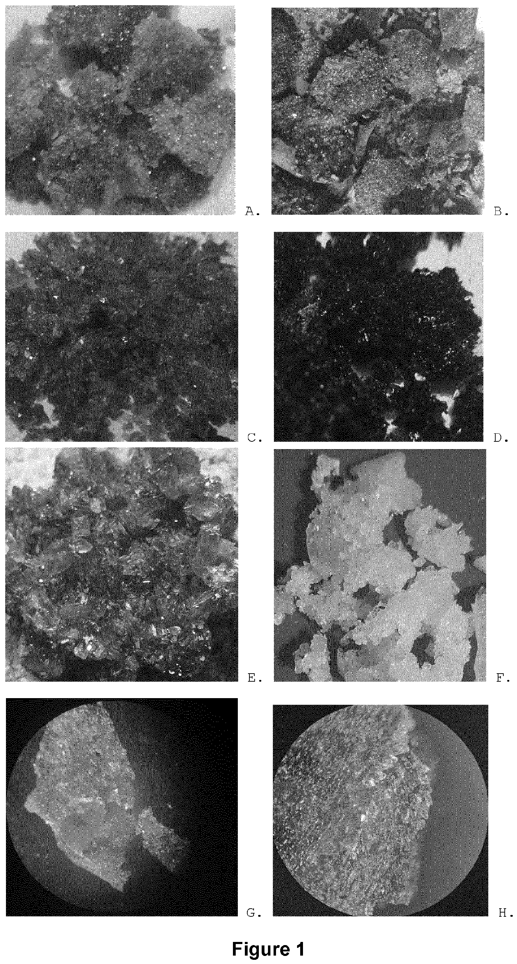

- Figure 1 illustrates the co-crystals of erythritol and of various plant extracts of the preparation of the invention at different concentrations, respectively with green tea extract (A), with blueberry extract (B), with cranberry extract (C), with green tea and hibiscus extract (D), with mint green tea extract and edible gold (E), with mango extract (F), with Pitaya extract, viewed under optical microscope at 25x (G) and 80x (H) magnification, wherein the co-crystal geometric composition may be seen;

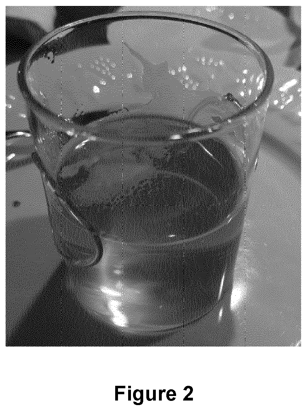

- Figure 2 illustrates the co-crystals of erythritol and of green tea extract of Figure 1 (A), reconstituted in water at 20°C for about 60 seconds, showing colour, aroma and taste comparable to the original extract ones reconstituted in an analogous water volume;

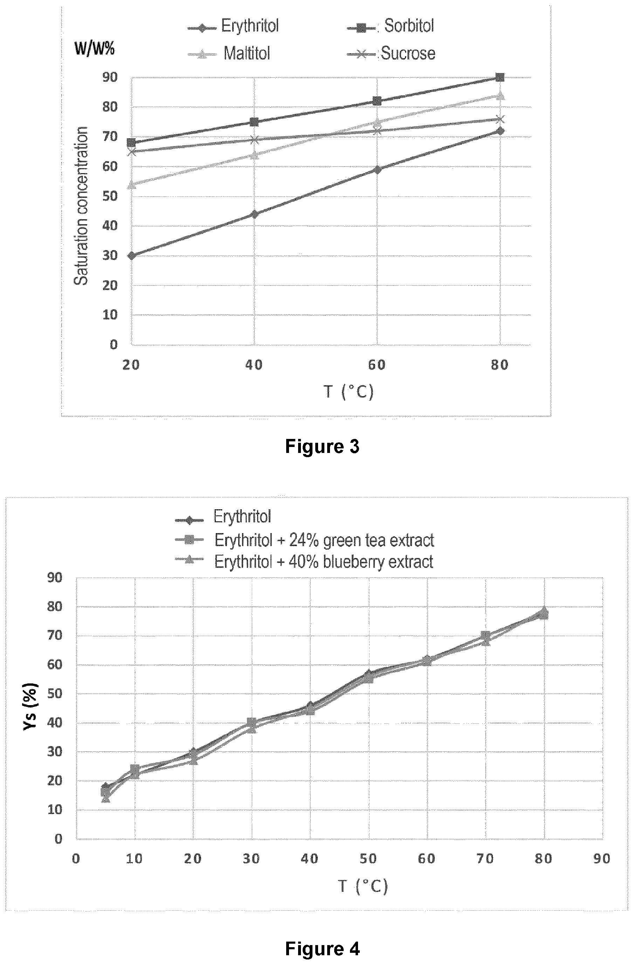

- Figure 3 illustrates the saturation curve in water of erythritol compared to other sugars and alcohol-sugars, having the greatest difference between the saturation concentrations ranging from 80°C and 20°C in order to offer a fast and optimal co-crystallization by cooling of the plant extracts, at relatively low temperatures and such that the bioactive, nutritional and aromatic substances present in solution are not damaged;
- Figure 4 illustrates the saturation curve of erythritol in water, in the presence of plant extracts having different nature and concentration, wherein the solubility is expressed by the weight fraction of the solute erythritol (Yₛ) as a function of temperature (T), in the presence of various plant extracts at various concentrations;

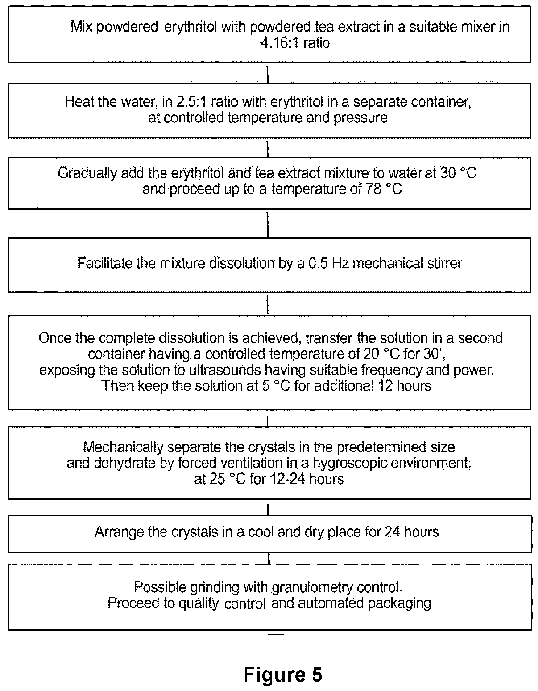

- Figure 5 reports the block diagram of an example of the co-crystallization method of erythritol and green tea extract of Figure 1 (A), by the controlled cooling technique.

### DETAILED DESCRIPTION OF PREFERRED EMBODIMENTS

The preparation of the invention includes one or more plant extracts for use in the foodstuffs, such as the products or the compounds containing or consisting of aromatic, nutritional and/or bioactive substances for use in foodstuffs, taken from the plant tissues of origin (fruits, leaves, seeds, stems, flowers, roots and other parts of the plant or plant organism) by the usual technologies, such as grinding, dissolution in solvents, drying, dehydration or others. The plant extracts used in the food preparation of the invention are also found in the form of powders, granules, microgranules, micronized and the like, soluble in water.

By way of indicative and non-limiting example, the plant extracts usable for the invention are those deriving from the following plant organisms and products thereof: Acacia, limestone blue wattle (Acacia caerulescens), Acacia concinna, Acacia pycnantha, Silver maple (Acer saccharum), Acerola, Yarrow, Actaea racemosa, Aesculus, Agave, Pine needles, Garlic, Chasteberry, Flame tree, Apricot, Bladderwrack, Spirulina alga, Wakame alga, Grass-wracks, red algae, Aloe, Amaranth, Wild black cherry, Wild black cherry tree, Emblica (Phyllanthus emblica), Pineapple, Angelica, Water-melon, Anise, Peanut, Orange, Red orange, Seville orange, Arctium, Argan, Arnica montana, Aronia, Devil's claw (climbing plant), Alpine Artemisiae, Ascophyllum nodosum, Ashwagandha (Indian Ginseng), Aspergillus oryzae, Astragalus (Huang qí), Garden orache, Oat, Avicennia marina, Avocado, Hawthorn berry, Juniper berry, Vanilla pod, Acai berry, Goji berries, Bacopa monnieri, Bajakah, Bamboo, Banana, Banksia, Baobab, Red beet, Basil, Holy basil (Ocimum tenuiflorum), Bergamot, Birch tree, Bhringraj (Maka), Hawthorn, Bletilla, Boswellia serrata, Broccoli, Pecan butter, Cocoa, Cactus, Coffee, Green coffee, Calendula, Calendula officinalis, Camelia sinensis, Camomile, Camu Camu (Myrciaria dubia), Hemp, Sugar cane, Cannabis (CBD), Cinnamon, Cantaloupe, Capsicum annuum, Carambola, Artichoke, Milk thistle, Carrot, Cassia salvatica or Senna tora, Chestnut tree, Lemon caviar, Cauliflower, Brussels sprouts, Cabbage, Red cabbage, Kurly kale, Centaurea, Indian pennywort, Red Centre lime, Centipeda Lour., Cereals, Pickles, Cucumber, Chaga, Chamaecyparis thyoides, Coffee beans, Green Coffee beans, Cinchona tree, Green chiretta, Chlorella pyrenoidosa, Common chicory, Cherry, Ciliegia mora, Cherry tree, Cinchona officinalis, Rose hip, Red onion, Spring onion or green onion, Lemon verbena, Citrus, Cnidium, Coca, Coconut, Coriolus versicolor, Black Cohosh, Coleus, Coriander, White willow bark, Pine bark, Watercress, Black cumin, Turmeric, Davidsonia, Desmodium adscendens, Dumburumba, Echinacea, Ecklonia, Common ivy, Eleutherococcus, Enoki (Flammulina Velutipes), Epilobium, Epimedium, Horse tale, Japanese blood grass, Wheat grass, Cat grass, Yerba mate, Eriobotrya, Eucalyptus, Common bean (Phaseolus vulgaris), Griffonia simplicifolia Baill, Cocoa beans, Arrowroot starch, Fig tree, Fenugreek, Fennel, Cornflower, Cherry blossom, Flannel flower (Actinotus helianthi), Elderflowers, Pokeweed, Hawthorn leaf, Ginseng leaf, Maple leaf, Leaves of the coffee plant, Banana leaves, Olive tree leaves, Strawberry, Dragon fruit (Pitaya), Passion fruit, Mushroom, Garcinia cambogia, Gardenia, Winter green, Mulberry, White mulberry, Jasmine, Gentian, Geranium, Lily, Gymnema, Juniper, Ginkgo biloba, Ginpent, Ginseng, Ginseng Panax, Sunflower, Common jujube, Wheat, Buckwheat, Corn, Grifola frondosa, Guarana, Guava, Gubinge, Guduchi (Tinospora Cordifolia), Hamamelis, Helichrysum, Hericium, Mountain horopito (Pseudowintera colorata), Huperzia, Hibiscus, Goldenseal, Ylang-ylang, Hypericum, Iris, Jacaranda mimosifolia, Jalapeño, Jambul (Syzygium cumini or Malabar plum), Jojoba, Kava Kava, Kelp, Key Lime, Kennedia nigricans, Kiwi, Konjac, Kratom, Kumarahou, Laminiariales, Raspberry, Blue raspberry, Dock, Lettuce, Lavender, Lychee, Lilium candidum, Lime, Lime (Citrus aurantiifolia), Australian desert lime, Tahiti lime, Lemon, Liquorice, Lonicera, Blue lotus (Nymphaea caerulea), Hop, Maca, Macadamia, Magnolia, Tangerine, Almond, Mango, Mangosteen, Manuka, Matcha, Apple, Aubergine, Common melilot, Melissa officinalis, Pomegranate, Melon, Green Melon, Mint, Native peppermint (Mentha australis), Spearmint, Merrika, Mesquite, Mimosa, Black mimosa, Mintbush (Mentha australis), Vaccinium (Bilberry), Vaccinium (Blueberry), Vaccinium (Huckleberry), Bog bilberry, Momordica charantia, Blackberry, Moringa oleifera, Neem (Azadirachta indica), Hazelnut, Nutmeg, Juglans nigra, Pecan nut tree, Nuts, Morinda citrifolia, Nopal, Okra or gumbo, Sea buckthorn, Meadowsweet, Ononis, Opuntia or Prickly pear, Orchid, Nettle (Common Nettle), Barley, Oryza, Oxycoccus (Cranberry), Guelder rose (Viburnum opulus), Dwarf palm tree (Serenoa repens), Screw pine, Papaya, Poppy, Papyrus, Fever few, Passiflora incarnata, Potato, Sweet potato, Spruce, Peony, Pepper, Sichuan pepper, Cayenne pepper, Mountain pepper, Pear, Peaches, Rose petals, Cerastium, Peyote, Physalis peruviana, Great plantain, African cherry, Pimpinella pruatjan, Trembling poplar (Acronychia acidula), Pea, Pistachio, Pitaya, Giant knotweed (Reynoutria sachalinensis), Pomaderris kumeraho, Pomelo, Tomato, Cherry tomato, Grapefruit, Common purslane (Portulaca Oleracea), Pouteria Locuma, Bellis perennis (Daisy), Parsley, Plum, Green plum, Psyllium, Psoralea corylifolia, Butcher's broom, Desert Quandong (Santalum acuminatum), Rhubarb, Radicchio, Nettle plant root, Ginseng root, Liquorice root, Marshmallow root (Althea radix), Peony root, Reetha (Sapindus mukorossi), Reishi, Riberry (Syzygium luehmannii), Black currant, Castor-oil plant, Rhodiola rosea, Rooibos, Rose, Roselle or Karkadè, Rosemary, Arugula, Safed Musli (Chlorophytum borivilianum), Dead Sea salts, Common sage, Elderberry, Sandal or Sandalwood, Sapindus, Sassafras, Saussurea, Schisandra chinensis, Scutellaria, Celery, Tamarind seed, Cocoa seeds, Chia seeds, Sunflower seeds, Flax seeds, Sesame seeds, Grape seeds, Pumpkin seeds, Polygala senega, Shatavari (Asparagus racemosus), Shiitake, Siraitia grosvenorii, Smilax ornata, Soy, Spinaches, Stellaria media, Prune, Syzygium smithii, Tapioca, Dandelion, Telopea, Hericium erinaceus, Lime tree, Thyme (Thymus Vulgaris), Toffee, Tongkat Ali, Tremella fuciformis (Snow fungus), Common caltrop, Meadow clover, Tutti frutti, Pine needle tea, White tea, Chai tea, Gaultheria Procumbens, Butterfly pea flower tea, Giava tea (Orthosiphon aristatus), Black tea, Oolong tea, Green tea, Purple tea, Grape fruit, Concord grapes, Bearberry, Valerian, Vanilla, Vetiver, Violet, Garden violet, Red vine, Yucca, Yuzu, Ginger, Pumpkin, Zucchini.

According to the invention, one or more of the aforementioned plant extracts for use in foodstuffs are co-crystallized with erythritol having formula 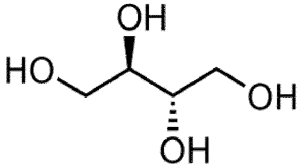 which carries out at the same time the function of co-crystallization agent of said plant extracts and sweetener of the food preparation of the invention. In fact, erythritol is a sugar substitute, which the Inventors surprisingly discovered being also particularly suitable to act as co-crystallizer of the plant extracts used in the preparation of the invention, to be readily reconstituted in a beverage in an aqueous solution by a consumer.

According to the invention the final volume per dose to be served (cup, glass or anything) of the co-crystal is generally comprised within 0.5 - 5 cc, allowing an easy transportability and preservation of the extract.

The erythritol used in the food preparation of the invention is in the form of crystals easily soluble in water, having a saturation curve ranging from about 30g/100 mL at 5°C to more than 250g/100 mL at 80°C. In a peculiar way the erythritol crystallization in water increases in amount and speed with an increasing supersaturation level, completing in less than 24 hours. For example, at the 1.1 supersaturation level after two hours about 25% of the crystallization occurs, while at the 3.5 supersaturation level in two hours crystallization is already almost 80%, that is practically complete. Further, the cooling speed of the solution of plant extracts and erythritol has no substantial effect on the co-crystallization extent, determining only an effect on the size and shape of the co-crystals. Such characteristics are optimal for the co-crystallization action at industrial level of the plant extracts in the preparation of the invention, as the co-crystallization process spontaneously and entirely completes in a very short time and with minimum usage of external energy.

At the end of the co-crystallization process, the uncrystallized erythritol remains in solution and it may be recovered for a further usage, generating savings and better economic performance. For example, in the cooling stage from 80°C to 5°C of a solution containing 250g/100mL of erythritol, the latter crystallizes for about 80%. The residual solution therefore contains about 30g/100mL of erythritol, which may be recovered for further use, or it may be concentrated by dehydration, with further co-crystal precipitation.

Compared to other sugars and alcohols-sugars in water, the erythritol saturation curve illustrated in Figure 3 shows a greater difference between the saturation concentrations in the temperature range from 80°C to 20°C.

This erythritol characteristic allows a fast and optimal co-crystallization thereof with the plant extracts of the preparation of the invention, by cooling at relatively low temperatures, such that the bioactive, nutritional and aromatic substances present in solution are not damaged. In fact, erythritol has a saturation curve which makes it efficient in a particular way to co-crystallize together with the plant extracts, starting from relatively low temperatures, generally lower than 90°C and preferably of 75-80°C, that do not interfere with the aromatic, nutritional or volatile substances contained in the plant extracts themselves.

Besides, erythritol has the advantage of having a relatively high melting point, equal to about 122°C, avoiding the "caramelization" problem in the production stage of the co-crystals.

In addition to this, the specific erythritol saturation curve allows the co-crystallization with the plant extracts used in the invention, with no further additive and by a relatively fast and reproducible process.

The Inventors have also surprisingly found that plant extracts of different origin have a negligible impact on erythritol peculiar saturation curve. In this regard in Figure 4 the erythritol saturation curve in water is represented, in the presence of plant extracts having different origin and concentration. Solubility is expressed with the weight fraction of the solute erythritol (Yₛ) as a function of the temperature (T), in the presence of various plant extracts at different concentrations. In fact, this figure experimentally shows that the erythritol saturation curve is not substantially modified by the presence in solution of the plant extracts of the preparation of the invention, at the concentrations useful to reconstitute the final beverage in an aqueous solution.

According to the invention, erythritol is present in the co-crystals in a concentration ranging from 9% to 98% by weight with respect to the total weight of the food preparation of the invention.

Besides being not hygroscopic and heat stable up to 121°C, erythritol has also the advantage of being completely odourless, this allowing not to change the flavour and the aroma of the co-crystallized and then reconstituted into a beverage plant extract, giving the beverage only a slight greater sweetness. The peculiar saturation curve allows to use relatively low erythritol concentrations compared to that of the plant extracts to be crystallized; in fact, according to the invention, in the co-crystals the weight ratio between the plant extract or the plant extracts and erythritol may range from 0.1 to 1.0.

Such low concentrations are perfect for the co-crystal reconstitution in a beverage, with a complete and fast dissolution of crystals in water and without an excessive sweetening, which would instead occur using other sugars or polyalcohols having greater sweetening power. In fact, among the sweeteners substituting the common sugar (sucrose), erythritol has a rather low sweetening power, equal to only about 60-70% of the sucrose one, at equal weight. This characteristic is also advantageously used in the food preparation of the invention, because an excessive sweetness might alter the extract taste in a substantial way and not appreciated by many users. If necessary, on the other hand, it is also possible, in the packaging stage of the final product, to add an extra dose of erythritol in a crystallized form, in order to increase the beverage sweetness.

In this way, even in the possible use as "flavoured sweetener" for beverages or other food products, the preparation of the invention allows to dose in a suitable way in the co-crystals the erythritol sweetening properties with the plant extract flavouring and nutritional ones.

Erythritol has also the advantage to be approved for foodstuffs use in Europe, United States, Japan and in about 60 other countries in the world and shows a safety and tolerability profile unique among polyols and sugars. In fact, erythritol has a unique metabolic profile among polyols, being substantially inert from the absorption and metabolic point of view for the human body. Erythritol is rapidly and substantially in a completely way absorbed by the intestine by passive diffusion and it is not further metabolized by the human body, being then excreted as it is by urine. For such a reason erythritol is an extremely safe product for use in foodstuffs up to doses of 1g/kg of body weight per day.

Being optimally absorbed at the intestinal level, erythritol turns out to be the best tolerated sweetener at the gastrointestinal level. Further, as it does not cause any glucose increase in plasma and it gives zero calories, it does not cause hyperglycaemia or a fat mass increase and therefore it is particularly recommended for diabetic patients and for preventing obesity. Studies have moreover proved that erythritol offers the best protection against dental decay among polyols and sugars.

If required, to the preparation of the invention based on food plant extracts co-crystallized with erythritol, in the crystallization stage or subsequently to this, some flavours and/or some dyes and/or other food additives may be added in order to further improve product preservation, appearance, scent and flavour.

By way of a non-limiting example, the main additives which may be added alone or separately to erythritol co-crystals and to plant extracts are the following: Ethyl acetate, Potassium acetate, Acetyl-L-carnitine, Acetic acid, Ascorbic acid, benzoic acid, Carminic acid, Citric acid, Kojic acid, Erythorbic acid, Ethylenediaminetetraacetic acid, Folic acid, Hyaluronic acid, Lactic acid, Malic acid, Pantothenic acid, Sulphurous acid, Sorbic acid, Acidophilus, Coconut water, Powdered coconut water, Aldehyde C18 (gamma-nonalacton), Alfalfa, Alpha-acetolactate decarboxylase, Tapioca starch, Aminopeptidase (or aminopeptidase), Amylase, Annatto or E160b, Anthocyanins, Aronia, Apocarotenal (beta-apo-8-carotenal), Argan, red lumpy clay, Arginine, Arginine nitrate, Chocolate flavours, Ascophyllum nodosum, Calcium ascorbate, Sodium ascorbate, Ascorbyl palmitate, Asparaginase, Aspergillopepsin, Astaxanthin, Bacillus coagulans, BCAA, Sodium benzoate, Potassium benzoate, Sodium benzoate, Beta-carotene, Beta-glucanase, Oat beta-glucans, Bifidobacterium animalis, Bifidobacterium bifidum, Bifidobacterium longum, Titanium dioxide, Biotin, Potassium bisulphite, Sodium bisulphite, Black pepper, Carmine blue, Bromelain, Psyllium husks, Butylhydroxyanisole, Butylhydroxytoluene, Butylparaben, Caffeine, Calcium, Calcium 2-ketogluconate, Camphor, Canthaxanthine, Capsanthin, Caramel, Carboxypeptidase, Carmine, Mixed carotenoids, Carrageen, Catalase, Cellulase, Keratin, Cystine, Calcium citrate, Magnesium citrate, Potassium citrate, Citrulline, Chlorophyll, Citral, Chlorella, Thiamine hydrochloride, Cochineal, Chlorophyllin, Creatine nitrate, Menthol crystals, Curcumin, Dihydrocoumarin hydrolase, elevATP, Hemicellulase, Digestive enzymes, Lucerne, Erythritol, Sodium erythorbate, Ethyl lauroyl arginate, Ethylmaltol, Ethylparaben, Ethylvanillin, Eucalyptol, Mustard seed flour, Ficin, Phytase, Laurel leaves, Folate, Fructo-oligosaccharides, Furaneol, Propyl gallate, Amaranth sprouts, Chickpea sprouts, Azuki beans sprouts, Buckwheat sprouts, Lentil sprouts, Millet sprouts, Quinoa sprouts, Daikon radish sprouts, Chia seed sprouts, Flax seed sprouts, Steviol glycoside, Glucoamylase, Glucanase, Copper gluconate, Glucose-6-phosphate isomerase (or phosphoglucose isomerase), Glutaminase, Monosodium glutamate, Glutamine, Glutathione, Arabic gum, Guar gum, Xanthan gum, Helichrysum, Sodium hyaluronate, Inulinase, Agave inulin, Invertase, L-Carnosine, Lactase, Potassium lactate, Coconut milk, Almond milk, Soy milk, Lactobacillus acidophilus, Lavender, Sunflower lecithin, Soy lecithin, Sandal wood, Leuconostoc carnosum 4010, Nutritional yeast, Linalool, Lipase, Lipoxygenase, Lipoxydase, Wood smoke liquid or extract, Lysine, Lutein, Magnesium, Maltodextrin, Maltol, β-Mannanase, MCT, Potassium metabisulphite, Sodium metabisulphite, Methylparaben, Mono- and diglycerides of fatty acids, N-acetylglucosamine, Niacin, Nicotinamide, Nitrite, Potassium nitrate, Sodium nitrite, Non-nano zinc oxide, Peppermint essential oil, Edible gold, Oryza, Palmitoylethanolamide, Pancreatin, Papain, Paprika, Pectin lyase, Pectinase, Pentosans, Pepsin, Peptidase, Collagen peptides, Piperonal (heliotropin), Peroxidase, Pyridoxine, Pyridoxine hydrochloride, Polyphosphates, Bee pollen, Pearl powder, Prebiotics, Propylparaben, Propionates, Prolyl-endopeptidase, Protease, Protein-glutamine glutaminase, Organic pea proteins, Organic sprouted brown rice proteins, Pullulanase, Resveratrol, Black currant, Riboflavin, Rose, Damask rose, Beet rot red, Saccharomycete, Sea salt, Himalayan salt or pink salt, Methyl salicylate, High-fructose corn syrup, Selenium, Selenomethionine, Hemp seeds, Mustard seed, Sesbania, Silicon, Sodium ascorbyl phosphate, Sodium methylparaben, Sodium propylparaben, Zinc sulphate, Sodium sulphite, Calcium sorbate, Potassium sorbate, Stevia, Tapioca, Tert-butyl-hydroquinone, Thiamine, Tocopherol, Trimethylglycine, Trypsin, Ubidecarenone, Urease, Vanilla, Vanillin, Vitamin A, Vitamin B2, Vitamin B5, Vitamin B6, Vitamin B12, Vitamin C, Vitamin D, Vitamin E, Vitamin K, Zinc, Unrefined canne sugar, Xylanase.

The formation co-crystals of the preparation of the invention may be prepared by a "solid-state" process, wherein very little or no solvent is used, by grinding, extrusion and spray freezing techniques.

As an alternative and preferably, co-crystallization is carried out through a "solution-based" process, wherein a solvent (preferably water) is used, which is then removed from the crystallized product. The "solution-based" process is preferably carried out by means of the cooling and/or evaporation or precipitation technique, or by using anti-solvents and/or suspension crystallization techniques. The "solution-based" crystallization may be positively assisted by some technologies, such as ultrasound application in the crystallization stage, or by usage of fluids in a supercritical state (generally carbon dioxide), used as antisolvents, solvents and/or co-solvents.

The "solution-based" process is preferable for the production of co-crystals of erythritol and plant extracts of the invention, as it uses the supersaturation as main force, allowing in turn to achieve an effective control on the co-crystal size and morphology. With said technology one also has the advantage to be able to provide polymorphic formats and co-crystals having a high degree of purity.

On the other hand, the disadvantages consisting mainly in the need to separate the crystals from the stock solution are minimized, in the production of the co-crystals of erythritol and plant extracts of the preparation of the invention, thanks to the high crystallization percentage. Further, the residual solvent (mainly water) may be easily recovered and recycled.

Using the "solution-based" technique it is necessary that the substances to be co-crystallized are soluble in the selected solvent. Hence the importance of selecting the most suitable solvent. For such a purpose, water has ideal characteristics for the co-crystallization process of erythritol and plant extracts of the invention, as erythritol and most of the plant extracts turn out to be soluble in water (while for example erythritol is poorly soluble in other commonly used solvents, such as ethanol). Moreover water, in addition to being cheap and easily available, does not modify the organoleptic properties of the extracts and may be easily removed and recovered at the end of the crystallization process.

Hereinafter, the description is given of one among the different co-crystallization manners of erythritol and the plant extracts forming the food preparation of the invention, based on controlled cooling.

The cooling co-crystallization is based on temperature change, as a function of the solubility of different solutes. For this purpose, both compounds to be co-crystallized are dissolved in the solvent and then, by the temperature controlled decrease, supersaturation and then crystallization are achieved.

The cooling crystallization has been and is still widely used at the pharmaceutical industrial level and in the related disciplines on a large number of organic molecules. In the co-crystallization, the phase diagrams at different temperatures of the substances to be co-crystallized, their relative concentration and the solvent related one are fundamental parameters for the best outcome of the process. Further, shaking or stirring means and solvent flow controls are needed during the cooling co-crystallizzation process at the industrial level. The cooling co-crystallization process then may be also assisted by suitably calibrated ultrasound systems. The co-crystallization stage is then followed by the solvent removal one, which may be obtained in different ways.

In the example shown in Fig. 5, the co-crystallization process has been carried out through the following steps. First of all, the powdered erythritol is mixed by a suitable mechanical mixer with the powdered plant extract (in the example, a pure green tea extract, obtained by sonication and reverse osmosis) in the suitable proportions. In this example the weight ratio between erythritol and solvent is optimally 2.5:1, while the one between extract and solvent is 0.6:1, therefore with a ratio between extract weight and erythritol weight equal to 0.24. Such a ratio has been selected considering the saturation curve of erythritol and the extract under consideration in water and taking into account the extract and erythritol amount needed to reconstitute a unit of beverage to be served.

A suitable amount of pure water is then heated by means of a thermostat in a suitable container and the erythritol and green tea extract mixture is gradually added starting from a water temperature of 30°C and up to 78°C, at constant atmospheric pressure. A mechanical stirrer at 0.5 Hz frequency favours the dissolution of the mixture in water. Once the predetermined temperature of 78°C is reached, the solution is transferred into a second container set to the controlled temperature of 20°C, for a first co-crystallization stage, assisted by ultrasound application for 30 minutes. Temperature is then gradually lowered to 5°C in order to complete the co-crystallization. The product is kept at 5°C for 12 hours and then transferred in the dehydration chamber for the residual solvent removal and for the further crystallization by evaporation/precipitation. In the dehydration chamber, the co-crystals, suitably mechanically reduced to the desired size of a few millimetres, are exposed to a temperature of 25°C in a highly hygroscopic environment and with forced ventilation for 12-24 hours, depending on the crystal size. The co-crystals thus obtained are divided by size and arranged on a plane surface, in a fresh and dry environment for additional 24 hours, before being packaged, after a random quality check.

By way of a non-limiting example, hereinafter some examples are given of the composition of the formulations used in the production of the co-crystals forming the preparation of the invention, wherein the amounts are by weight. The initial plant extract amounts are kept substantially unchanged within the co-crystals, while the erythritol ones may change in the above-described manner.

### Example 1

Green tea 0.600 g
Erythritol 2.5 g

### Example 2

Blueberry 0.264 g
Arnica 0.15 g
Sodium glutamate 0.03 g
Erythritol 2.6 g

### Example 3

Cranberry 0.5 g
Arnica 0.15 g
Acetic acid 0.05 g
Erythritol 2.6 g

### Example 4

Mango 0.75 g
Sencha Green tea 0.7 g
Riboflavin 0.05 g
Sodium ascorbate 0.03 g
Erythritol 2.8 g

### Example 5

Mango 0.5 g
Liquorice 0.5 g
Edible gold 0.03 g
Erythritol 2.2 g

### Example 6

Lemon 0.7 g
Orange 0.7 g
Ascorbic acid 0.1 g
Erythritol 2.9 g

### Example 7

Rose hip 0.733 g
Vitamin C 0.22 g
Vitamin E 0.10 g
Erythritol 2.4 g

### Example 8

Pitaya 0.667 g
Lemon 0.30 g
Ginger 0.30 g
Erythritol 2.8 g

### Example 9

Mint Green tea 0.6 g
Hibiscus 0.6 g
Erythritol 3.0 g

### Example 10

Black tea 0.4 g
Green tea 0.4 g
Mango 0.3 g
Vanilla 0.1 g
Erythritol 2.9 g

Hereinafter some examples are given of beverages which may be produced with the food preparation of the invention.

### Example 1 Preparation

Green tea 0.600 g
Erythritol 2.5 g
Crystal dose by weight, needed to reconstitute in a beverage 180 mL of cold (22°C) or hot (55°C) water (volume approximately equal to a tea cup): about 2.3 g

### Example 6 Preparation

Lemon 0.700 g
Orange 0.700 g
Ascorbic acid 0.1 g
Erythritol 2.9 g
Crystal dose by weight, needed to reconstitute in a beverage 330 mL of cold water (22°C) (volume equal to a flask): about 6.2 g

### Example 9 Preparation

Mint Green tea 0.6 g
Hibiscus 0.6 g
Erythritol 3.0 g
Crystal dose by weight, needed to reconstitute in a beverage 180 mL of cold (22°C) or hot (55°C) water (volume approximately equal to a tea cup): about 1.8 g

### Example 10 Preparation

Black tea 0.4 g
Green tea 0.4 g
Mango 0.3 g
Vanilla 0.1 g
Erythritol 2.9 g
Crystal dose by weight, needed to reconstitute in a beverage 180 mL of cold (22°C) or hot (55°C) water (volume approximately equal to a tea cup): about 2.4 g.

## Claims

1. Food preparation, **characterized in that** it consists of one or more plant extracts for use in foodstuffs, co-crystallized with erythritol having formula: 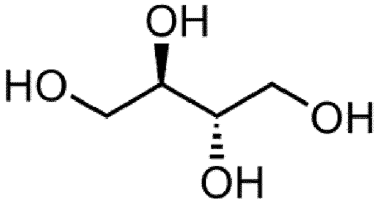 wherein the weight ratio between said plant extracts and said erythritol in the co-crystals ranges from 0.1 to 1.0.

2. The food preparation according to claim 1, **characterized in that** said plant extracts are plant extracts for use in foodstuffs, such as the products or compounds containing or consisting of aromatic, nutritional and/or bioactive substances for use in foodstuffs, in a water-soluble form.

3. The food preparation according to claim 2, **characterized in that** said plant extracts are in the form of powders, granules, microgranules, micronized and the like, soluble in water.

4. The food preparation according to claim 1, **characterized in that** erythritol is present in the co-crystals in a concentration ranging from 9% to 98% by weight with respect to the total weight of the food preparation of the invention.

5. The food preparation according to claim 1, **characterized in that** the final volume of the co-crystal of plant extracts and erythritol per dose to be served is comprised between 0.5 and 5 cc.

6. The food preparation according to claim 1, **characterized in that** it further includes flavours and/or dyes and/or other food additives in order to further improve preservation, appearance, scent and flavour of said preparation.

7. Method for the production of the food preparation according to one or more of the preceding claims, **characterized in that** said co-crystals of plant extracts and erythritol are prepared by means of a "solid state" process.

8. Method for the production of the food preparation according to one or more of the preceding claims, **characterized in that** said co-crystals of plant extracts and erythritol are prepared by means of a "solution-based" process in presence of the solvent water.

9. Beverage, **characterized in that** it is obtained by means of the food preparation according to one or more of the preceding claims.

10. Beverage, **characterized in that** it is sweetened and flavoured by means of the food preparation according to one or more of the preceding claims.

11. Erythritol having formula 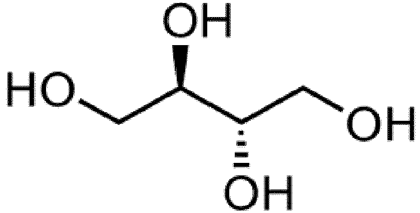 for the use in the formation of the co-crystals with plant extracts according to one or more of the preceding claims.
